Europäisches Patentamt

European Patent Office

Office européen des brevets

(19)

(11) Publication number: **0 015 556**
**B1**

(12) **EUROPEAN PATENT SPECIFICATION**

(45) Date of publication of patent specification: 04.07.84

(51) Int. Cl.³: **C 08 L 23/00,**
**C 08 L 101/00**

(21) Application number: **80101137.0**

(22) Date of filing: **06.03.80**

(54) Laminar articles of polyolefin and a second polymer and process for making them.

(30) Priority: **06.03.79 US 18057**

(43) Date of publication of application:
**17.09.80 Bulletin 80/19**

(45) Publication of the grant of the patent:
**04.07.84 Bulletin 84/27**

(84) Designated Contracting States:
**BE DE FR GB IT NL**

(56) References cited:
**US - A - 3 373 222**
**US - A - 3 689 597**
**US - A - 3 975 463**
**US - A - 4 107 130**

(73) Proprietor: **E.I. DU PONT DE NEMOURS AND**
**COMPANY**
**Legal Department 1007 Market Street**
**Wilmington Delaware 19898 (US)**

(72) Inventor: **Subramanian, Pallatheri Manackal**
**2710 Tanager Drive**
**Wilmington, Delaware 19808 (US)**

(74) Representative: **Abitz, Walter, Dr.-Ing. et al,**
**Abitz, Morf, Gritschneder P.O. Box 86 01 09**
**D-8000 München 86 (DE)**

Courier Press, Leamington Spa, England.

## Description

Technical Field

This invention relates to manufacture of laminar, shaped, articles of a heterogeneous blend of a polyolefin and a second polymer, incompatible with the polyolefin, and to such articles especially in the form of barriers to permeation of fluid, liquid and gaseous, materials.

Background art

US—A—3,873,667 discloses a heat treatment process for decreasing the permeability of gases through a homogeneous composition of polyolefin and polyamids. That composition is disclosed to include an ionic hydrocarbon copolymer of ethylene and either acrylic or methacrylic acid. There is no suggestion that heterogeneous blends would exhibit improvement over homogeneous blends.

US—A—3,093,255 discloses compositions of polyolefin combined with polyamide. The patent clearly discloses that the polyolefin and the polyamide must be subjected to intensive mixing under high pressures and that homogeneity is desired over heterogeneity.

US—A—3,373,222; 3,373,223; and 3,373,224 all disclose homogeneous polymeric blends of polyolefin, polyamide and some dispersant material to obtain homogeneous blends exhibiting decreased permeability and improved mechanical properties as compared with blends having no dispersant. US—A—3,373,222 discloses carboxylated polyethylene; US—A—3,373,223 discloses a copolymer of ethylene with acrylic acid or methacrylic acid; and US—A—3,373,224 discloses a metal ion containing copolymer of ethylene and an $\alpha,\beta$-ethylenically unsaturated monocarboxylic acid. All of those patents disclose the benefit of utilizing the dispersant to obtain a homogeneous blend and none suggests that heterogeneous blends would be useful.

German published Application No. 2,746,181 discloses that a dispersion of polyvinylchloride partially dissolved in polyvinyl alcohol can be gelled and then subjected to laminar flow by rolling, molding or extruding the gel to yield a multilayer structure of low permeability to gases. The German Application discloses initial use of a homogeneous blend of the polymers and does not disclose use of either a polyolefin as one polymer component, or a dispersant such as was required in the other, previously-considered, patents.

US—A—3,975,463 discloses a blend of polyolefin and saponified ethylene vinyl acetate polymer with a compatibilizer-like third component. The blend is made using high shear means (for example, nylon type, dulmadge, and the like, high shear screws in the extruder in all examples) and the layered construction of the extrusion of that patent is, at most, three layers. There are layers with a majority of saponified ethylene vinyl acetate polymer and layers with a majority of polyolefin (Column 2, lines 12—16). The three layers of the patent are shown in Fig. 7, especially Fig. 7-B, and discussed, among other places, at Column 22. Fig. 6 and the accompanying discussion also pertains to the three layer structure. Fig. 1 is a partial section and shows only a portion of two layers rather than all three (Column 17, lines 28—40). Homogeneous mixtures of the polymeric substances are obtained by the high shearing forces used during mixing in the examples of this U.S. patent. By means of a specific technique, the articles are so formed from the melt of said substances that the composition varies in the thickness direction of the articles (e.g. in case of a bottle more of one polymer is present at the outer surface, while more of the other polymer is present at the inner surface, while in longitudinal direction the composition is equal and also continuous). However, the most important aspect is that the mixtures are homogeneous. As is stressed throughout the patent and as is specifically explained in column 13, line 28 to column 14, line 68, the so-called multi-layer structure of the reference product is due solely to a differential molten flow rate between the polymer components (see also column 16, line 26 et seq. of the U.S. patent). It is likewise evident that the "multi-layer" structure of the patent comprises three layers only, as disclosed in the figures and described in the text of the patent. This three-layer structure is the result of the wall effects in the extrusion equipment when extruding a composition having components with distinctly different molten flow rates. There can be no doubt that the process of the reference does not rely, for success, on using a heterogeneous mixture of component materials, and it is also a fact that the product of the reference is a structure of only three continuous layers of material.

Summary of the invention

According to this invention there is provided a process for manufacturing a laminar, shaped, article of polymeric material from a mixture comprising a polyolefin, a second polymer incompatible with the polyolefin selected from the group consisting of polyamides and polyesters, and an alkylcarboxyl-substituted polyolefin, characterized by the following steps: (i) establishing from the above mixture a melted, heterogeneous, blend of the polymeric materials without substantial additional mixing of the melted blend; and (ii) forming the melted blend by (a) stretching a body of the melt from 100 to 500 percent in at least one direction and (b) cooling the stretched body to below the melting point of the lowest melting polymer component, the polyolefin forming a continuous phase and the second polymer forming a discontinuous phase.

There is also provided a laminar, shaped, article comprising a combination of polyolefin, a second polymer incompatible with the polyolefin selected from the group consisting of polyamides and polyesters, and an alkylcarboxyl-substituted polyolefin, characterized in that the second polymer forms a

2

discontinuous phase and is present in the article, as thin, substantially two-dimensional, parallel and overlapping layers of material and is embedded in a continuous phase which is formed by the polyolefin, the alkylcarboxyl-substituted polyolefin being present between the two phases to adhere the two phases together.

Description of the invention

Films, filaments, sheets, containers and other shaped articles have long been made from polymeric compositions. Special qualities desired for shaped articles have required special polymers or specially formulated polymeric compositions. This invention utilizes a special process and a special formulation of polymers to yield a composition which exhibits improved barrier to fluid permeation and improved mechanical properties.

The general product of this invention is a laminar shaped article made from a mixture of two incompatible polymers and one polymer which serves to adhere together laminar domains of the incompatible polymers. The product is made by mixing together particles of the polymers, heating the mixture to yield a heterogeneous melt of material, and forming the melt in a way which results in stretching the melt to yield an elongated discontinuous polymer phase.

In one embodiment, the polymer particles, in unmelted form, are mixed thoroughly so as to provide a statistically homogeneous distribution and care must be exercised to avoid substantial additional mixing after the polymers have been heated to a melt. In another embodiment, the polymer particles can be combined in softened or molten form so long as the combination of polymers maintains a heterogeneous character. The blend can, also, be established by combining the polymers at a temperature such that one of the polyolefin or the second polymer is not softened or molten and then heating the combination. The success of the invention depends on establishing a melted heterogeneous blend of incompatible polymers so that, when the melt is stretched, such as by extrusion forces, one polymer, which is the polyolefin, is in the form of a continuous matrix phase and the second polymer is in the form of a discontinuous distributed phase. The second polymer comprising the discontinuous phase is present as a multitude of thin, substantially two dimensional, parallel and overlapping layers embedded in the continuous phase.

Also necessary for the success of this invention, is the polymer which adheres together adjacent layers or domains of the incompatible polymers. In view of its believed purpose, that polymer can be termed a compatibilizer; but the actual mechanism of its operation is not completely understood. It is believed that at least some of the compatibilizer is concentrated, in the laminar shaped article of this invention, between the adjacent layers of incompatible polymer joined partially with one layer and partially with an adjacent layer, thus adhering the layers together. Without the compatibilizer, shaped articles formed from heterogeneous melts of incompatible polymer have poor mechanical properties and, generally, cannot even by extruded or molded to yield unitary articles. For the purposes of this invention. "Incompatible polymers" mean polymeric materials which have substantially no mutual miscibility in the melt form.

Although it is not required, it is preferred that the second polymer used in practice of this invention is, as stated, in particulate form; and it is desired that both, the polyolefin and the second polymer should be mixed as particles. The particles should, as a general rule, be of a size, such that, the molten blend of incompatible polymers, when introduced to some melt stretching means, such as extrusion die lips, exhibits the heterogeneity necessary for practice of the invention. When the particles, especially particles of the second polymer, are of too small a size, the melted blend, even though not excessively mixed, tends to function as a homogeneous composition because the domains of material making up the discontinuous polymer phase are so small. When the particles especially particles of the second polymer, are of too large a size, the melted blend tends to form into shaped articles having a marbleized structure rather than a laminar structure; — the large domains of the materials which would make up the discontinuous phase extending to opposite boundaries of the shaped articles and causing disruption of the material which would make up the continuous phase. The particles are preferably generally regular in shape, such as cubical or spherical. The particles may, however, be irregular; and they may have one dimension substantially greater than another dimension such as would be the case, for example, when flakes of material are used.

When each of the incompatible polymers is present as individual particles, the particles are generally of approximately the same size although such is not required. The compatibilizer can be provided by itself as individual particles or it can be mixed into, coated onto, or otherwise combined with one or both of the incompatible polymers.

The thickness of the layers of material in the discontinuous phase is a function of the particle size combined with the degree of stretching in the forming step. The particle size of the polymer which will be the discontinuous phase is generally selected with a view toward resulting, after stretching, in overlapping layers which can be from about 0.5 to 50 $\mu$m thick and perhaps, sometimes slightly thicker.

Mixing particles of polymers can be accomplished by any well-known means such as by means of a vee-blender or a tumble mixer or, on a larger scale, by means of a double-cone blender. Continuous mixing of the particles can be accomplished by any of several well-known methods. Of course, the particles can also be mixed by hand; — the only requirement of the mixing being that any two statistical samplings of the mixture in a given mass of material should yield substantially the same composition. The mixing of the incompatible polymers can be accomplished by adding particles of the higher melting polymer to a melt of the lower melting polymer maintained at a temperature below the higher melting point. In that case, the melt is agitated to obtain an adequate mixture; and the mixture is, thus, ready for the heating step.

Once mixed, the incompatible polymers are heated to a temperature greater than the melting point of the highest melting polymer component. It is noted that the heating is conducted for the purpose of stretching the softened or melted blend. In the case of an incompatible polymer which exhibits no well-defined melting temperature, "melting temperature", as used here, refers to a temperature at least high enough that the polymers have been softened to the degree required to stretch each of the polymers in the blend. That heating results in a softened or melted, heterogeneous blend of materials and the heating must be conducted in a manner which avoids substantial additional mixing of the incompatible polymers because such mixing could cause a homogenization and combination of the melted particles and could result in a melt and a shaped article of homogeneous, unlayered, composition. The heating can be conducted by any of several well-known means and is usually conducted in an extruder. It has been learned that a single-screw extruder of the type which is designed for material transport and not material mixing can be used between the heating and forming steps of this invention without causing homogenization of the two phase incompatible polymer composition. To the extent that the composition retains an aspect of heterogeneity, to that extent the process and the product of this invention can be realized.

The forming step requires stretching of the melted blend followed by cooling. Stretching is an elongation of the two phase melt to cause a substantial change in the dimensions of the particles in the discontinuous phase. Stretching can be accomplished by any of several means, or by a combination of more than one such means. For example, the melt can be stretched by being squeezed between rollers or pressed between platens or extruded between die lips. Molding processes such as blow molding also cause stretching in accordance with this process. In the manufacture of containers as shaped articles, the stretching can be accomplished by a combination of extruding a blend of the heterogeneous melt to yield a container preform or parison followed by blow molding the parison into a finished container.

The stretching can be in one direction or in perpendicular directions. Whether the stretching is conducted in one direction or two, there has, be an elongation of from 100 to 500 percent in at least one direction; and an elongation of from 100 to 300 percent is preferred. While the upper limit set out herein is not critical, the lower limit is critical insofar as inadequate stretching does not yield the improved barriers to fluid permeation which characterize this invention. Avoidance of excessive stretching is important only insofar as excessive elongation of the melt may lead to weakening or rupture of the article.

Stretching is followed by cooling to below the temperature of the melting point of the lowest melting component to solidify the shaped article. The cooling can be conducted by any desired means and at any convenient rate. In the case of stretching by blow molding, the mold is often chilled to cool the article; and, in the case of extruding a film, cooling can be accomplished by exposure to cool air or by contact with a quenching roll.

As to the proportions of the components for practicing the invention, the incompatible, second, polymer which is to be a discontinuous phase in the shaped articles should be present in generally less than 40 weight percent of the mixture. It has been found that the incompatible, second, polymer should be present in more than 5 weight percent and less than 40 weight percent of the mixture and about 10 to 30 weight percent is preferred. The polyolefin should be present in more than 60 weight percent and less than 95 weight percent of the mixture and 70 to 90 weight percent is preferred. The compatibilizer should be present in 5 to 30 weight percent of the discontinuous phase and 10 to 20 weight percent is preferred. Any of the components can be used to introduce inert fillers into the composition provided only that the fillers are not of a kind or in an amount which would interfere with formation of the layered construction or with the desired or required properties of the composition. Amounts of opacifiers, colorants, lubricants and stabilizers which are ordinarily used in structural polymeric materials can be used herein. The amount of such filler is not included in the calculation of amounts of incompatible polymers and compatibilizers.

The polyolefins used in the composition of the invention include polyethylene, polypropylene, polybutylene and copolymers of those materials. Polyethylene is preferred and may be high, medium, or low density.

The second polymer, incompatible with the polyolefin, is selected from polyamides, and polyesters such as polyethylene terephthalate and polybutylene terephthalate.

Polyamides and copolyamides are well known and are made by reacting carboxylic acids with primary amines under well-known conditions. Examples of carboxylic acids are adipic acid, suberic acid, sebacic acid, azelaic acid, malonic acid, glutaric acid and pimelic acid. Examples of primary amines are tetramethylene diamine, pentamethylene diamine, hexamethylene diamine and octamethylene diamine. Exemplary polyamides include polypentamethylene adipamide, polyhexamethylene adipamide, polyhexamethylene sebacamide, polyamides obtained from lactams such as caprolactams

4

and from amino acids such as 11-aminoundecanoic acid. Polyhexamethylene adipamide and polycaproamide are preferred.

Polyesters are disclosed in US—A—2,465,319.

The alkylcarboxyl-substituted polyolefin compatibilizer is a polyolefin which has carboxylic moieties attached thereto, either on the polyolefin backbone itself or on side chains. By "carboxylic moiety" is meant carboxylic groups from the group consisting of acids, esters, anhydrides, and salts. Carboxylic salts are neutralized carboxylic acids and a compatibilizer which includes carboxylic salts as a carboxylic moiety also includes the carboxylic acid of that salt. Such compatibilizers are termed ionomeric polymers.

Compatibilizers can be prepared by direct synthesis or by grafting. An example of direct synthesis is the polymerization of an $\alpha$-olefin with an olefinic monomer having a carboxylic moiety; and an example of grafting is the addition of a monomer having a carboxylic moiety to a polyolefin backbone. In the compatibilizer made by grafting, the polyolefin is polyethylene or a copolymer of ethylene and at least one $\alpha$-olefin of 3—8 carbon atoms such as propylene, or a copolymer including at least one $\alpha$-olefin of 3—8 carbon atoms and a diolefin, such as 1,4-hexadiene. The polyolefin is reacted with an unsaturated carboxylic acid, anhydride, or ester monomer to obtain the grafted polymer. Representative eligible acids, anhydrides, and esters include: methacrylic acid; acrylic acid; ethacrylic acid; glycidyl methacrylate; 2-hydroxy ethylacrylate; 2-hydroxy ethyl methacrylate; diethyl maleate; monoethyl maleate; di-n-butyl maleate; maleic anhydride; maleic acid; fumaric acid; itaconic acid; monoesters of such di-carboxylic acids; dodecenyl succinic anhydride; 5-norborene-2,3-anhydride; nadic anhydride (3,6-endomethylene-1,2,3,6-tetrahydrophthalic anhydride); and the like. Generally, the graft polymer will have from 0.01 to 20, preferably 0.1 to 10, and most preferably 0.2 to 5, weight percent graft monomer. Grafted polymers are described in greater detail in US—A—4,026,967 and US—A—3,953,655.

In the compatibilizer made by direct synthesis, the polymeric material is a copolymer of an $\alpha$-olefin of 2—10 carbon atoms and an $\alpha,\beta$-ethylenically unsaturated carboxylic acid, ester, anhydride, or salt having 1 or 2 carboxylic moieties. The directly synthesized compatibilizer is made up of at least 75 mole percent of the olefin component and from 0.2 to 25 mole percent of the carboxylic component.

Ionomeric compatibilizer is preferably made from directly synthesized compatibilizer and is preferably made up of 90 to 99 mol percent olefin and 1 to 10 mol percent $\alpha,\beta$-ethyenically unsaturated monomer having carboxylic moieties wherein the moieties are considered as acid equivalents and are neutralized with metal ions having valences of 1 to 3, inclusive, where the carboxylic acid equivalent is monocarboxylic and are neutralized with metal ions having a valence of 1 where the carboxylic acid equivalent is dicarboxylic. To control the degree of neutralization, metal ions are present in an amount sufficient to neutralize at least 10 percent of the carboxyl moieties. Representative eligible $\alpha$-olefins and unsaturated carboxylic acid, anhydride, and ester monomers are those previously herein described. Ionomeric polymers are described in greater detail in US—A—3,264,272.

The compatibilizer is generally 0.5 to 3.0 weight percent carboxylic component.

In making shaped articles of this invention, the polyolefin is taken to provide the continuous phase and is used in an amount of 60 to 95 weight percent of the total composition while the second, incompatible, polymer is taken to provide the discontinuous phase and is used in an amount of 5 to 40 weight percent of the total composition. The alkylcarboxyl-substituted polyolefin is used in an amount of 0.5 to 3 weight percent of the total composition.

Description of the preferred embodiments
Example 1

In this example, polyolefin, polyamide, and compatibilizer were mixed: (a) to make a heterogeneous blend in accordance with the present invention; and (b) to make a homogeneous blend.

The polyamide was prepared by condensing hexamethylene diamine, adipic acid, and caprolactam to obtain a composition of 77.5 weight parts of polyhexamethylene adipamide and 22.5 weight parts of polycaproamide. That polyamide exhibited a melting point of about 215°C.

The polyolefin was a linear polyethylene having a density of 0.944 gram per cubic centimeter, a melt index of 0.24 as determined according to ASTM D-1238, and is commercially available from E. I. du Pont de Nemours and Company under the registered trademark designation "Alathon" PE 5593. Particles of the polyamide and the polyethylene were generally cubical and were about 3—4 millimeters on each side.

The alkylcarboxyl-substituted polyolefin compatibilizer was obtained by melt grafting fumaric acid onto polyethylene having a density of 0.958 gram per cubic centimeter and a melt index of about 10, as determined according to ASTM D-1238. The fumaric acid was grafted onto the polyethylene in an amount of about 0.9 weight percent based on the total weight of the polymer in accordance with the teaching of US—A—4,026,967. Particles of the compatibilizer were generally cubical and were about 2—3 millimeters on a side. The material exhibited a melting point of about 135°C.

The mixture included 77 weight percent polyolefin, 20 weight percent polyamide, and 3 weight percent compatibilizer and was tumbled in a drum to achieve complete, even, particle distribution.

**Example 1**

A portion of the mixture was fed directly into an extrusion blow molding machine such as that sold by Voith-Fischer Plastic Machines, Inc. of Paramus, New Jersey, U.S.A., identified as model FBZ 1000 and equipped with a low mixing screw and tooling. Bottles with a capacity of about 450 milliliters were blow molded at an extrusion temperature of about 240°C.

**Comparative 1**

A portion of the mixture was homogenized in a Werner & Pfleiderer twin screw extruder at a temperature of about 250°C and was then fed directly to the same extrusion blow molding machine used in Example 1, above, to make bottles of homogeneous wall structure.

**Control 1**

As a control, bottles were also made using the polyolefin alone in the same extrusion blow molding machine at an extrusion temperature of about 190°C.

Bottles from each of the three categories were tested visually and were tested for barrier to permeation of unleaded gasoline and pneumatic impact strength of the walls. Test results are in Table I.

TABLE I

|  | Visual | Pneumatic impact strength (kg-cm/0.025 mm) | Permeation barrier (g-loss) |
|---|---|---|---|
| Example 1, this invention | laminar distribution of polyamide | 2.40 | 0.25 |
| Comparative 1, homogeneous structure | homogeneous material distribution | 1.75 | 9.8 |
| Control 1, polyethylene | same material throughout | 2.14 | 19 |

Visual testing was conducted by inspection, with and without the use of an optical microscope, of edge slices of material from the bottles. As indicated in the Table, bottles from Comparative 1 and Control 1 exhibited no laminar structure. Bottles from Example 1 did exhibit a laminar structure of polyamide layers distributed through the bottle wall thickness. Edge slices of the bottle walls viewed through cross polarized light filters clearly evidenced laminar distribution of the polyamide in bottles of Example 1 and evidenced homogeneous distribution of polyamide in bottles of Comparative 1. The polyamide layers were estimated to be about 0.5 to 15 $\mu$m thick, distributed as multiple, overlapping, layers across the bottle wall which was about 1 millimeter thick.

Pneumatic impact was determined by adapting the procedure of ASTM D-3099 to test wall sections of the bottles. The procedure, generally described, involves determination of the energy absorbed by a test portion of the wall material where it is struck by a pneumatically driven steel ball.

Barrier to permeation was tested by adding 100 cubic centimeters of unleaded gasoline to bottles from each category, sealing the bottles, and then determining weight loss after 500 hours at about 23°C and about 50 percent relative humidity. It is noted that the bottles of the invention exhibited barrier to permeation of gasoline almost forty times as great as bottles of the same material with homogeneous walls and more than seventy-five times as great as the polyethylene control.

**Examples 2—7**

Using the same polyolefin, polyamide and compatibilizer as in Example 1, several different weight ratios of the materials were mixed and 450 milliliter bottles were blown using the same blow molding and extruding machinery as under Example 1, above. The bottles were blown to have walls of about 0.75—1 millimeter thickness—slightly less than the bottles under Example 1, above. For comparative purposes, Comparative 2 and 3 and Control 2 were also run. Except for the slightly thinner bottle wall thickness, Example 2, Comparative 2, and Control 2 represent repeat runs of the bottles made under Example 1, above.

The bottles were tested visually and barrier to permeation of fluid was tested by the gasoline loss test described under Example 1, above, except that the test was run for 34 days.

Results of the tests are shown in Table II. Laminar walls means that sections of the walls could be delaminated or pulled apart in layers without cohesive failure. Bottles from Comparative and Control examples had uniform walls which could not be so-delaminated.

TABLE II

| Run number | Polyolefin/ polyamide/ compatibilizer (weight ratios) | Nature of blend | Nature of walls | Permeation barrier (g-loss) |
|---|---|---|---|---|
| Example 2 | 77/20/3 | Heterogeneous | Laminar | 0.39 |
| " 3 | 79/20/1 | " | " | 0.36 |
| " 4 | 82/15/3 | " | " | 0.38 |
| " 5 | 84/15/1 | " | " | 0.36 |
| " 6 | 87/10/3 | " | " | 0.43 |
| " 7 | 89/10/1 | " | " | 0.46 |
| Comparative 2 | 77/20/3 | Homogeneous | Uniform | 15.1 |
| Comparative 3 | 79/20/1 | " | " | 10.2 |
| Control 2 | 100/0/0 | " | " | 27.2 |

Example 8

In this example, bottles were made using the same polyethylene and polyamide as in previous examples along with a compatibilizer of zinc-neutralized copolymer of ethylene and methacrylic acid. The compatibilizer was about 90 weight percent ethylene and about 10 weight percent methacrylic acid wherein about 70 percent of the methacrylic acid groups were neutralized by zinc ions. The compatibilizer exhibited a melt index of about 1.1 as determined at 190°C in accordance with ASTM D-1238.

Bottles having laminar walls were blown using the same equipment as previously described and a heterogeneous mixture of component materials made up of 82 weight parts polyethylene, 15 weight parts polyamide, and 3 weight parts compatibilizer.

Fluid permeation was determined, as previously described, using unleaded gasoline; and, in 25 days, bottles of this example exhibited a loss of about 0.5 grams compared with a loss of about 25 grams from polyethylene control bottles made during the same runs.

Example 9

Example 8 was repeated except that the compatibilizer was a polymer made by grafting fumaric acid to a copolymer of ethylene, propylene, and 1,4-hexadiene (71/25/4, weight ratio) such that the compatibilizer contained about 1.8 weight percent fumaric anhydride functionality. The material and its preparation is described in more detail in US—A—4,026,967. Bottles prepared using that compatibilizer exhibited loss of about 0.5 grams of unleaded gasoline in the previously described fluid permeation test, after 25 days.

Example 10, as an extension of Example 4, the same mixture of materials, including the fumaric-grafted compatibilizer, in the same weight ratio, was used to blow mold containers having a capacity of about 18 liters and a wall thickness of about 3 millimeters. The bottle-making equipment used was solid by Ingersoll Rand of Nashua, New Hampshire, U.S.A. and was identified as model B-30 with a barrier flighted screw and reciprocating action. The extrusion temperature was about 243°C.

To test the fluid permeation barrier, about three liters of unleaded gasoline were placed in these bottles and in polyethylene control bottles of the same size made in the same sequence of runs. The bottles were located outdoors, in ambient conditions, shaded from direct overhead sun exposure, for 72 days through summer-autumn weather in Wilmington, Delaware, U.S.A. During that period, the bottles of this invention exhibited a loss of about 3.5 grams of gasoline and the control bottles exhibited a loss of about 123 grams of gasoline.

**Claims**

1. A process for manufacturing a laminar, shaped, article of polymeric material from a mixture comprising a polyolefin, a second polymer incompatible with the polyolefin selected from the group consisting of polyamides and polyesters, and an alkylcarboxyl-substituted polyolefin, characterized by the following steps: (i) establishing from the above mixture a melted, heterogeneous, blend of the polymeric materials without substantial additional mixing of the polymers after they have been heated to a melt; and (ii) forming the melted blend by (a) stretching a body of the melt from 100 to 500 percent in at least one direction and (b) cooling the stretched body to below the melting point of the lowest melting polymer component, the polyolefin forming a continuous phase and the second polymer forming a discontinuous phase.

2. The process of Claim 1 wherein the melted, heterogeneous, blend is established by heating particles of the polyolefin, the second polymer, and the alkylcarboxyl-substituted polyolefin, without substantial additional mixing, to a temperature above the melting point of the highest melting polymer component.

3. The process of Claim 1 wherein the melted, heterogeneous, blend is established by combining the polyolefin, the second polymer, and the alkylcarboxyl-substituted polyolefin at a temperature such that one of the polyolefin or the second polymer is not softened or molten and heating the combination to a temperature above the melting point of the highest melting polymer component.

4. The process of Claim 1 wherein the melted, heterogeneous, blend is established by heating particles of a combination of the polyolefin and the alkylcarboxyl-substituted polyolefin and particles of the second polymer, without substantial additional mixing, to a temperature above the melting point of the highest melting polymer component.

5. The process of Claim 1 wherein the melted, heterogeneous, blend is established by heating particles of the polyolefin and particles of a combination of the second polymer and the alkylcarboxyl-substituted polyolefin, without substantial additional mixing, to a temperature above the melting point of the highest melting polymer component.

6. The process of Claim 1 wherein the alkylcarboxyl-substituted polyolefin is selected from the group consisting of polyolefins which have carboxylic moieties attached thereto, either on the polyolefin backbone itself or on side chains.

7. A laminar, shaped, article comprising a combination of polyolefin, a second polymer incompatible with the polyolefin selected from the group consisting of polyamides and polyesters, and an alkylcarboxyl-substituted polyolefin, characterized in that the second polymer forms a discontinuous phase and is present in the article, as thin, substantially two-dimensional, parallel and overlapping layers of material and is embedded in a continuous phase which is formed by the polyolefin, the alkylcarboxylsubstituted polyolefin being present between the two phases to adhere the two phases together.

8. The article of Claim 7 wherein the alkylcarboxyl-substituted polyolefin is selected from the group consisting of polyolefins which have carboxylic moieties attached thereto, either on the polyolefin backbone itself or on side chains.

9. The article of Claim 7 wherein the second polymer is polyamide and is present in layers of material more than 0.5 and less than 50 $\mu$m thick.

10. The article of Claim 7 wherein the second polymer is present in about 5 to 40 weight percent, the polyolefin is about 60 to 95 weight percent, and the alkylcarboxyl-substituted polyolefin is about 0.5 to 3 weight percent, of the article.

**Patentansprüche**

1. Verfahren zur Herstellung eines lamellenförmigen geformten Gegenstands aus polymerem Material aus einem Gemisch, das ein Polyolefin, ein zweites Polymeres, das mit dem Polyolefin unverträglich ist, ausgewählt aus der Gruppe von Polyamiden und Polyestern, und ein alkylcarboxylsubstituiertes Polyolefin enthält, gekennzeichnet durch folgende Stufen: (i) Bereiten aus dem vorstehenden Gemisch von einer geschmolzenen heterogenen Mischung der polymeren Materialien, ohne wesentliches zusätzliches Vermischen der Polymeren, nachdem sie zu einer Schmelze erhitzt wurden; und (ii) Formen der geschmolzenen Mischung durch (a) Strecken eines Körpers aus der Schmelze von 100 bis 500% in mindestens einer Richtung, und (b) Kühlen des gestrecken Körpers unter den Schmelzpunkt der niedrigst schmelzenden Polymerkomponente, wobei das Polyolefin eine kontinuierliche Phase bildet und das zweite Polymere eine diskontinuierliche Phase bildet.

2. Verfahren nach Anspruch 1, bei dem die geschmolzene heterogene Mischung erzielt wird durch Erhitzen von Teilchen des Polyolefins, des zweiten Polymeren und des alkylcarboxylsubstituierten Polyolefins, ohne wesentliches zusätzliches Vermischen, auf eine Temperatur über dem Schmelzpunkt der höchstschmelzenden Polymerkomponente.

3. Verfahren nach Anspruch 1, bei dem die geschmolzene heterogene Mischung erzielt wird durch Kombinieren des Polyolefins, des zweiten Polymeren und des alkylcarboxylsubstituierten Polyolefins bei einer derartigen Temperatur, dass eines von Polyolefin oder dem zweiten Polymeren nicht erweicht oder geschmolzen wird, und Erhitzen der Kombination auf eine Temperatur über dem Schmelzpunkt der höchstschmelzenden Polymerkomponente.

4. Verfahren nach Anspruch 1, bei dem die geschmolzene heterogene Mischung erzielt wird durch Erhitzen von Teilchem einer Kombination des Polyolefins und des alkylcarboxylsubstituierten Polyolefins und von Teilchen des zweiten Polymeren, ohne wesentliches weiteres Vermischen, auf eine Temperatur über dem Schmelzpunkt der höchstschmelzenden Polymerkomponente.

5. Verfahren nach Anspruch 1, bei dem die geschmolzene heterogene Mischung erzielt wird durch Erhitzen von Teilchen des Polyolefins und von Teilchen einer Kombination des zweiten Polymeren und des alkylcarboxylsubstituierten Polyolefins, ohne wesentliches weiteres Vermischen auf eine Temperatur über dem Schmelzpunkt der höchstschmelzenden Polymerkomponente.

6. Verfahren nach Anspruch 1, bei dem das alkylcarboxylsubstituierte Polyolefin ausgewählt wird aus der Gruppe von Polyolefinen, an die Carboxylreste entweder an das Polyolefingrundgerüst selbst oder an Seitenketten gebunden sind.

7. Lamellenförmiger geformter Gegenstand, enthaltend eine Kombination aus Polyolefin, einem zweiten Polymeren, das mit dem Polyolefin unverträglich ist, ausgewählt aus der Gruppe von Polyamiden und Polyestern, und ein alkylcarboxylsubstituiertes Polyolefin, dadurch gekennzeichnet, dass das zweite Polymere eine diskontinuierliche Phase bildet und in dem Gegenstand als dünne, im wesentlichen zweidimensionale, parallele oder überlappende Materialschichten vorliegt und in eine kontinuierliche Phase eingebettet ist, die durch das Polyolefin gebildet wird, wobei das alkylcarboxylsubstituierte Polyolefin zwischen den beiden Phasen vorhanden ist und die beiden Phasen aneinander klebt.

8. Gegenstand nach Anspruch 7, bei dem das alkylcarboxylsubstituierte Polyolefin ausgewählt ist aus der Gruppe von Polyolefinen, an die Carboxylreste entweder an das Polyolefingerüst selbst oder an Seitenketten gebunden sind.

9. Gegenstand nach Anspruch 7, in dem das zweite Polymere Polyamid ist und in Materialschichten von mehr als 0,5 und weniger als 50 $\mu$m Dicke vorhanden ist.

10. Gegenstand nach Anspruch 7, in dem das zweite Polymere zu etwa 5 bis 40 Gew.-%, das Polyolefin zu etwa 60 bis 95 Gew.-% und das alkylcarboxylsubstituierte Polyolefin zu etwa 0,5 bis 3 Gew.-% des Gegenstands vorhanden sind.

**Revendications**

1. Un procédé pour la fabrication d'un article laminaire de forme déterminée de matière polymère à partir d'un mélange comprenant une polyoléfine, un second polymère incompatible avec la polyoléfine choisi parmi les polyamides et les polyesters, et une polyoléfins alcoyl-carboxylée, caractérisé par les étapes suivantes: (i) établissement à partir du mélange ci-dessus d'un mélange fondu hétérogène des matières polymères sans opération de mélange supplémentaire importante des polymères après qu'ils ont été chauffés pour donner une masse fondue; et (2) formage du mélange fondu par (a) étirage d'une masse de la matière fondue à raison de 100 à 500 pour cent dans au moins une direction et (b) refroidissement de la masse étirée au-dessous du point de fusion du composant polymère ayant le plus bas point de fusion, la polyoléfine formant une phase continue et le second polymère formant une phase discontinue.

2. Le procédé selon la revendication 1, dans lequel on forme le mélange fondu hétérogène en chauffant des particules de la polyoléfine, du second polymère et de la polyoléfine alcoylcarboxylée, sans action de mélange supplémentaire importante, à une température au-dessus du point de fusion du composant polymère ayant le point de fusion le plus élevé.

3. Le procédé selon la revendication 1, dans lequel on forme le mélange fondu hétérogène en combinant la polyoléfine, le second polymère, et la polyoléfine alcoylcarboxylée à une température telle qu'un composant choisi parmi la polyoléfine et le second polymère ne soit pas ramolli ou foudu, et on chauffe la combinaison à une température au-dessus du point de fusion du composant polymère ayant le point de fusion le plus élevé.

4. Le procédé selon la revendication 1, dans lequel on forme le mélange fondu hétérogène en chauffant des particules d'une combinaison de la polyoléfine et de la polyoléfine alcoylcarboxylée et des particules du second polymère, sans action de mélange supplémentaire importante, à une température au-dessus du point de fusion du composant polymère ayant le point de fusion le plus élevé.

5. Le procédé selon la revendication 1, dans lequel on forme le mélange fondu hétérogène en chauffant des particules de la polyoléfine et des particules d'une combinaison du second polymère et de la polyoléfine alcoylcarboxylée, sans action de mélange supplémentaire importante, à une température au-dessus du point de fusion du composant polymère ayant le point de fusion le plus élevé.

6. Le procédé selon la revendication 1, dans lequel la polyoléfine alcoylcarboxylée est choisie parmi les polyoléfines qui ont des portions carboxyliques attachées à elles, soit sur le squelette lui-même de la polyoléfine, soit sur des chaînes latérales.

7. Un article laminaire de forme déterminée comprenant une combinaison d'une polyoléfine, d'un second polymère incompatible avec la polyoléfine choisi parmi les polyamides et les polyesters, et d'une polyoléfine alcoylcarboxylée, caractérisé en ce que le second polymère forme une phase discontinue et est présent dans l'article sous la forme de couches minces de matière, substantiellement bidimensionnelles, parallèles et se recouvrant partiellement, et est enrobé dans une phase continue qui est formée par la polyoléfine, la polyoléfine alcoylcarboxylée étant présente entre les deux phases pour faire adhérer les deux phases entre elles.

8. L'article selon la revendication 7, dans lequel la polyoléfine alcoylcarboxylée est choisie parmi les polyoléfines qui ont des portions carboxyliques attachées à elles, soit sur le aquelette lui-même de la polyoléfine, soit sur des chaînes latérales.

9. L'article selon la revendication 7, dans lequel le second polymère est un polyamide et est présent en couches de matière de plus de 0,5 et de moins de 50 $\mu$m d'épaisseur.

10. L'article selon la revendication 7, dans lequel le second polymère est présent à raison d'environ 5 à 40% en poids, la polyoléfine à raison d'environ 60 à 95% en poids, et la polyoléfine alcoyl-carboxylée à raison d'environ 0,5 à 3% du poids de l'article.